# EUROPEAN PATENT APPLICATION

(11) **EP 2 120 417 A2**
(43) Date of publication of application: **18.11.2009**
(21) Application number: 09251083.3
(22) Date of filing: 09.04.2009
(51) Int. Cl.: H04L 29/06

(54) **Method for providing service, streaming server and program**

(30) Priority: 13.05.2008 JP 2008126319
(71) Applicant: Sony Corporation, Tokyo (JP)
(72) Inventor: Masuda, Yasuto, Tokyo (JP)
(74) Representative: Jackson, Jonathan Andrew

(57) **Abstract**

A method for providing a service includes the steps of sending presence information indicating the availability of a service-providing unit (2) from the service-providing unit to a streaming server (5) by a first transmission method, the service-providing unit being configured to provide a service including providing a motion picture and audio for a video display unit (3) requesting the service, the streaming server (5) being configured to send content containing the contents of the service; inserting the presence information into the content and streaming the content to the video display unit (3); extracting the presence information from the content and requesting the service-providing unit (2) to provide the service on the basis of the content of the presence information by a second transmission method; and establishing a transmission route (14) between the service-providing unit (2) and the video display unit (3) by the second transmission method and providing the service for the video display unit via the transmission route (14).

## Description

The present invention relates to methods for providing services, streaming servers, and programs.

There is technology for video delivery to a plurality of terminals using the Session Initiation Protocol (SIP) as a communication control protocol. Nowadays a communication line capable of delivering audio and motion pictures using the SIP, generally called a next generation network (NGN), is being realized. NGN upgrades a telephone network for voice calls to one based on the Internet protocol (IP), namely, an IP telephone network, and also allows access to the Internet. In addition, NGN allows access to various networks for providing content data, including broadcast networks, and provides streaming services for terminals.

To provide a streaming service, a content-providing server for providing the service is connected to NGN. The content-providing server then simultaneously delivers the content to numerous terminals connected to NGN using a multicast transmission mechanism prepared for delivery. The use of the content-providing server allows, for example, a broadcast wave to be resent via NGN to terminals in blind areas that are not reached by the broadcast wave. In addition, for example, the content-providing server connected to NGN can itself broadcast via NGN, thereby delivering a variety of content.

One expected content delivery service via a network such as NGN is a video delivery service using an IP camera in which a video captured by a service provider is divided into IP packets and is sent to users via NGN. An example of the content delivered by the video delivery service is a pay service, such as legal counseling or fortune telling, in which a user and a remote service provider mutually send images of their faces captured by cameras and can talk while directly seeing each other's face. The video delivery service is delivered via a connection line between a service-providing unit used by the service provider and a terminal used by the user. To inform the user of his or her response status for this service, the service provider sends presence information containing information about the availability of the service-providing unit to the terminal used by the user. By receiving the presence information from the service provider, the user can learn the response status of the service provider.

Japanese Patent Application Publication No. 2005-208685 discusses a technique for automatically sending information to a user using presence information and metadata.

In the above video delivery service, however, the procedure by which the user terminal extracts the presence information is complicated by the use of SIP, a standard protocol for NGN, as the protocol used when the service-providing unit sends the presence information to the user terminal. In addition, if a service provided by a particular service provider is popular, numerous users wishing to receive that service from the service provider rush into its service-providing unit to acquire presence information. Access requests from the user terminals concentrated on the service-providing unit can impose an abnormal load on the service-providing unit and delay processing by the service-providing unit.

It is therefore desirable to allow a service provider to reliably provide a service for a user wishing for that service.

A method for providing a service according to an embodiment of the present invention includes the steps of sending presence information indicating the availability of a service-providing unit from the service-providing unit to a streaming server by a first transmission method, the service-providing unit being configured to provide a service including providing a motion picture and audio for a video display unit requesting the service, the streaming server being configured to send content containing the contents of the service provided by the service-providing unit; inserting the presence information received by the streaming server from the service-providing unit into the content and streaming the content to the video display unit; extracting the presence information from the content received by the video display unit from the streaming server and requesting the service-providing unit to provide the service on the basis of the content of the presence information by a second transmission method; and establishing a transmission route for providing the service between the service-providing unit and the video display unit requesting the service by the second transmission method and providing the service for the video display unit via the transmission route.

In this method, first, the video display unit requesting the service acquires the presence information for the service-providing unit from the streaming server. On the basis of the presence information, the video display unit requests the service from the service-providing unit. In response to the request for the service, the service-providing unit establishes the transmission route for the video display unit by the second transmission method and delivers the service by multicast transmission.

In the above embodiment, the presence information for the service-providing unit is sent to the video display unit via the streaming server by the first transmission method. The video display unit requesting access to the service-providing unit can first acquire the availability of the service-providing unit on the basis of the presence information received from the streaming server. This prevents numerous video display units from simultaneously requesting access to the service-providing unit, thus distributing a load on the service-providing unit. Another benefit is that the service-providing unit can provide the service for the video display unit without a delay in processing.

Preferably, suitable for video delivery via, for example, a telephone network called a next generation network (NGN).

Various respective aspects and features of the invention are defmed in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:
Fig. 1 is a schematic diagram showing an example of a service-providing system in an embodiment of the present invention;
Fig. 2 is a block diagram showing an example of the internal configuration of a service-providing unit in the embodiment of the present invention;
Fig. 3 is a block diagram showing an example of the internal configuration of a video display unit in the embodiment of the present invention;
Fig. 4 is a block diagram showing an example of the internal configuration of a streaming server in the embodiment of the present invention;
Fig. 5 is a diagram showing an example of a process of sending presence information in the embodiment of the present invention;
Fig. 6 is a diagram showing an example of writing of the presence information in the embodiment of the present invention;
Fig. 7 is a diagram showing an example of the structure of a transport stream and a transport packet in the embodiment of the present invention;
Fig. 8 is a diagram showing an example of how to insert a transport packet in the embodiment of the present invention;
Fig. 9 is a sequence diagram showing an example of a process executed in the service-providing system in the embodiment of the present invention;
Fig. 10 is a diagram showing an example of an initial display of a menu in the embodiment of the present invention;
Fig. 11 is a diagram showing an example of a display appearing after the presence information is updated in the embodiment of the present invention;
Fig. 12 is a diagram showing an example of a display from which the user selects to make a call in the embodiment of the present invention;
Fig. 13 is a diagram showing an example of a display from which the user selects a service provider in the embodiment of the present invention;
Fig. 14 is a diagram showing an example of a display from which the user selects to call the service provider in the embodiment of the present invention; and
Fig. 15 is a sequence diagram showing an example of a process of sending content (motion picture) with the presence information inserted therein by superimposition in the embodiment of the present invention.

An embodiment of the present invention will now be described with reference to the attached drawings.

In this embodiment, a system for connection to a next-generation telephone network called NGN is configured. NGN is a network of telephone lines connected together mainly by optical fibers to enable high-volume data transmission. NGN not only supports the usual functions of telephone lines, including voice calls, but also can deliver motion picture data, which has relatively high volumes, by delivery processing such as multicast transmission.

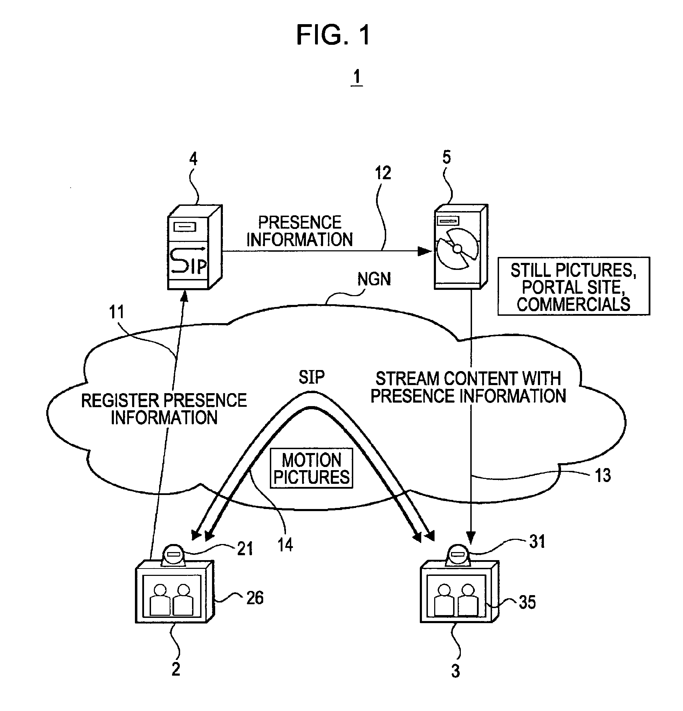

Fig. 1 is a schematic diagram showing an example of the configuration of a service-providing system 1 according to this embodiment.

In this embodiment, the service-providing system 1 will be described as an example application.

The service-providing system 1 includes a service-providing unit 2 that provides a service including providing a motion picture and audio for a terminal requesting the service and a video display unit 3 that requests the service from the service-providing unit 2. The service-providing unit 2 is managed by a service-providing company that provides the user with a service such as legal counseling or fortune telling.

The service-providing system 1 further includes an SIP presence server 4 that receives presence information indicating the availability of the service-providing unit 2 from the service-providing unit 2. The service-providing system 1 further includes a streaming server 5 that streams content containing the contents of the service provided by the service-providing unit 2 to the video display unit 3. Examples of the content streamed by the streaming server 5 include information about a portal site for collectively displaying a plurality of service providers and information about advertisements for service providers, the contents of services, still pictures, motion pictures, and audio.

The service-providing unit 2 includes an image-capturing section 21 that captures images of the service provider's face and a display section 26 that displays video. Similarly, the video display unit 3 includes an image-capturing section 31 that captures images of the user's face and a display section 35 that displays video. The service-providing unit 2 and the video display unit 3 further include microphones and speakers (not shown).

Next, an example of operation of the service-providing system 1 will be described.

The service-providing unit 2 sends presence information to the SIP presence server 4 by a first transmission method, namely, HTTP (route 11). This presence information contains information indicating the availability of the service-providing unit 2. For example, the presence information may indicate that the service provider is in the "online", "offline", "away", or "busy" status. While the service provider is in the "online" status, a call from the user is accepted. While the service provider is in the "offline" status, a call from the user is not accepted because the service-providing unit 2 is powered off. While the service provider is in the "away" status, a call from the user is not accepted because the service provider is away from his or her seat. While the service provider is in the "busy" status, a call from the user is not accepted because the service provider is serving another user.

The presence information is temporarily registered in the SIP presence server 4. The SIP presence server 4 manages presence information received from a plurality of service-providing units 2 separately for individual service providers and sends updated presence information to the streaming server 5 (route 12).

Receiving the updated presence information, the streaming server 5 inserts the presence information into the content. The streaming server 5, which divides the content into MPEG (moving picture experts group) packets, inserts the presence information into metadata specifying the data structure of the MPEG packets. An example of the structure of the MPEG packets will be described later. The streaming server 5 then generates an MPEG stream of successive MPEG packets and streams the MPEG stream to the video display unit 3 by HTTP (route 13), where the Real-Time Streaming Protocol (RTSP) may instead be used. The video display unit 3 extracts the presence information from the received MPEG stream and displays the availability of the service-providing unit 2 together with the content on the display section 35.

If the user selects a desired service from the presence information for the service provider displayed on the display section 35, an SIP session is established between the video display unit 3 and the service-providing unit 2 via an SIP server and a proxy server (not shown) by a second transmission method, namely, SIP (route 14).

The service-providing unit 2 and the video display unit 3 have uniquely assigned telephone numbers. An SIP session is established when the user who attempts to receive the service designates the telephone number assigned to the service-providing unit 2, so that the service provider and the user can talk while mutually seeing captured video. This call is a service provided via NGN.

In addition to the function of displaying, for example, the other party's face during access to the service-providing unit 2 (during a call), the video display unit 3 has the function of displaying the content delivered by the streaming server 5 via IP broadcast. The video display unit 3 can therefore display the content received from the streaming server 5 on the display section 35 and output audio from the speaker (not shown) in real time.

In addition, the streaming server 5 can stream the presence information received from the service-providing unit 2 to a video display unit without a presence function. Hence, even a video display unit without the function of acquiring presence information by accessing the service-providing unit 2 can acquire the presence information for the service-providing unit 2 from the content received from the streaming server 5. This allows any user to start communication via NGN after learning in advance whether the service provider is currently available.

NGN will be described herein.

NGN is a network that can be controlled by SIP. NGN is a next-generation IP network, expected to replace the existing public networks, that integrates separately constructed IP networks for Internet services and telephone networks for telephone services into an IP communication network with improved quality of service (QoS) and security by using IP technology. In addition to telephone services, there is an effort underway to collectively provide television broadcasts via an IP network.

To initiate a session, SIP provides the function of identifying a communication party and the function of sending, receiving, and hanging up calls. SIP expresses messages, namely, communication data, in text format. An SIP-based system mainly includes a user agent and an SIP server. The user agent is an SIP terminal, such as a PC, with an IP telephone function. The user agent includes a user agent client with the function of sending requests and a user agent server with the function of responding to requests.

SIP has been studied as technology for integrating a telephone network into an IP network. Accordingly, E.164 number mapping (ENUM), which allows the use of existing telephone numbers, is one of the important functions of the SIP-based system in various IP network applications including an IP telephone service.

The standardization of ENUM is progressing through a joint effort between The Internet Engineering Task Force (IETF) and International Telecommunication Union Telecommunication Standardization Sector (ITU-T). An example of collaboration between ENUM and SIP is ENUM searching from SIP terminals and ENUM searching from SIP servers.

ENUM is technology for associating telephone numbers with addresses and services on the Internet to use the telephone numbers as an access tool. Telephone numbers are associated with addresses and services on a network by associating the system of internationally unique telephone numbers defined by ITU-T (called "E.164") with a special domain region (subdomain of ".e164.arpa") in the domain name system (DNS). A single number may be associated with a plurality of addresses and so on. For example, associating your telephone number with, for example, an e-mail address, a fax number, and a website URL by ENUM allows others to use the telephone number as a unified identification number serving as a tool for gaining access to you. For example, the ENUM domain name for the telephone number "03-1234-5678" (E.164 number) is found by replacing the leading "0" with "81 ", which is the country code of Japan, and reversing the digit order, namely, "8.7.6.5.4.3.2.1.3.1.8.e164.arpa".

This function of ENUM allows the user to use various IP network applications by using his or her current telephone number without being aware of this.

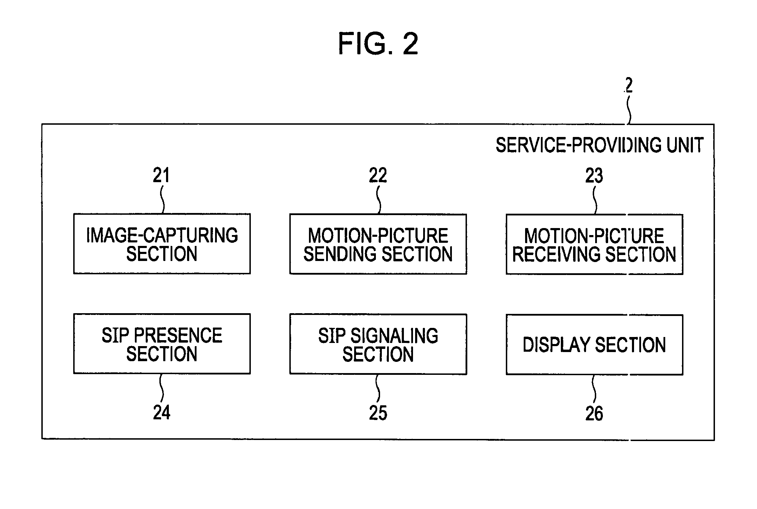

Fig. 2 is a block diagram showing an example of the internal configuration of the service-providing unit 2.

The service-providing unit 2 includes the image-capturing section 21, which captures images of the service provider to generate a motion picture, and a motion-picture sending section 22 that sends the motion picture generated by the image-capturing section 21 to the video display unit 3. The service-providing unit 2 further includes a motion-picture receiving section 23 that receives a captured motion picture of the user from the video display unit 3. The motion picture received by the motion-picture receiving section 23 is displayed on the display section 26. The service-providing unit 2 further includes an SIP presence section 24 that sends presence information updated by the service provider to the SIP presence server 4. The presence information sent to the SIP presence server 4 is registered in the SIP presence server 4. The service-providing unit 2 further includes an SIP signaling section 25 that establishes and terminates an SIP session between the service-providing unit 2 and the video display unit 3 requesting the service from the service provider.

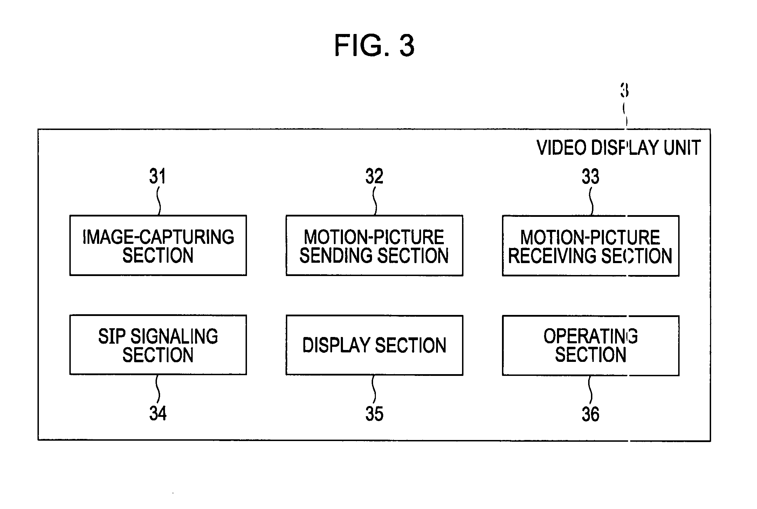

Fig. 3 is a block diagram showing an example of the internal configuration of the video display unit 3.

The video display unit 3 includes the image-capturing section 31, which captures images of the user to generate a motion picture, and a motion-picture sending section 32 that sends the motion picture generated by the image-capturing section 31 to the service-providing unit 2. The video display unit 3 further includes a motion-picture receiving section 33 that receives a captured motion picture of the service provider from the service-providing unit 2. The motion picture received by the motion-picture receiving section 33 is displayed on the display section 35. The video display unit 3 further includes an SIP signaling section 34 that establishes and terminates an SIP session between the service-providing unit 2 for the service provider requested to provide a service and the video display unit 3. The video display unit 3 further includes an operating section 36 with which the user can operate the video display unit 3. The operating section 36 includes, for example, buttons attached to the casing of the video display unit 3 and a remote control that allows the user to select any menu option from a menu screen displayed on the display section 36.

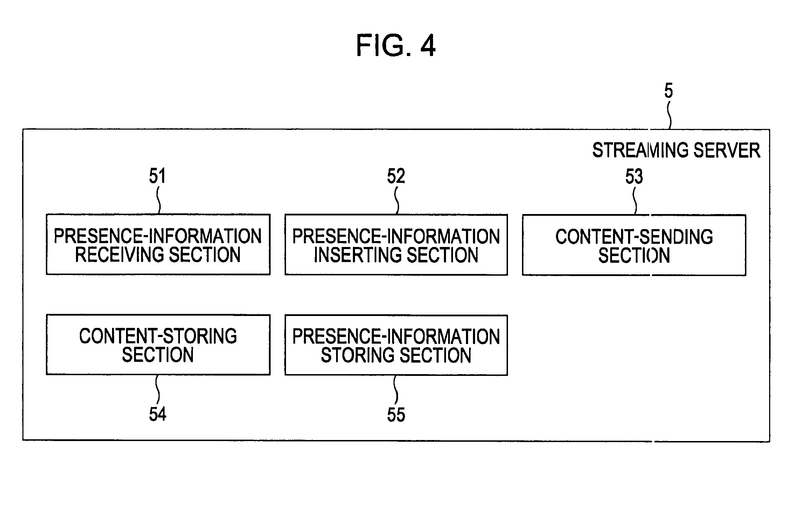

Fig. 4 is a block diagram showing an example of the internal configuration of the streaming server 5.

The streaming server 5 includes a presence-information receiving section 51 that receives the presence information from the SIP presence server 4 and a presence-information storing section 55 that stores the received presence information. The streaming server 5 further includes a content-storing section 54 that stores the content to be sent to the video display unit 3 and a content-sending section 53 that sends content read from the content-storing section 54 to the video display unit 3. The streaming server 5 further includes a presence-information inserting section 52 that inserts the presence information into the content by a predetermined method. The presence information is inserted into the content when the presence information is updated.

The streaming server 5 sends content containing information about still pictures and a portal site when the video display unit 3 gains access and requests the content to be sent for the first time. Hence, the streaming server 5 does not send the same data to the video display unit 3 over and over again and therefore does not overload the bandwidth of the line connecting the streaming server 5 and the video display unit 3 together.

In addition, the presence information stored in the streaming server 5 is managed separately for individual service providers that use the respective service-providing units 2. Accordingly, when receiving updated presence information from a plurality of service-providing units 2, the streaming server 5 can generate content reflecting the updated presence information separately for the individual service providers and send the content to the video display unit 3.

When the presence-information inserting section 52 inserts the presence information into the content, the content is divided into MPEG packets. The presence-information inserting section 52 inserts the presence information into metadata of the MPEG packets. The content-sending section 53 sends an MPEG stream of successive MPEG packets to the video display unit 3.

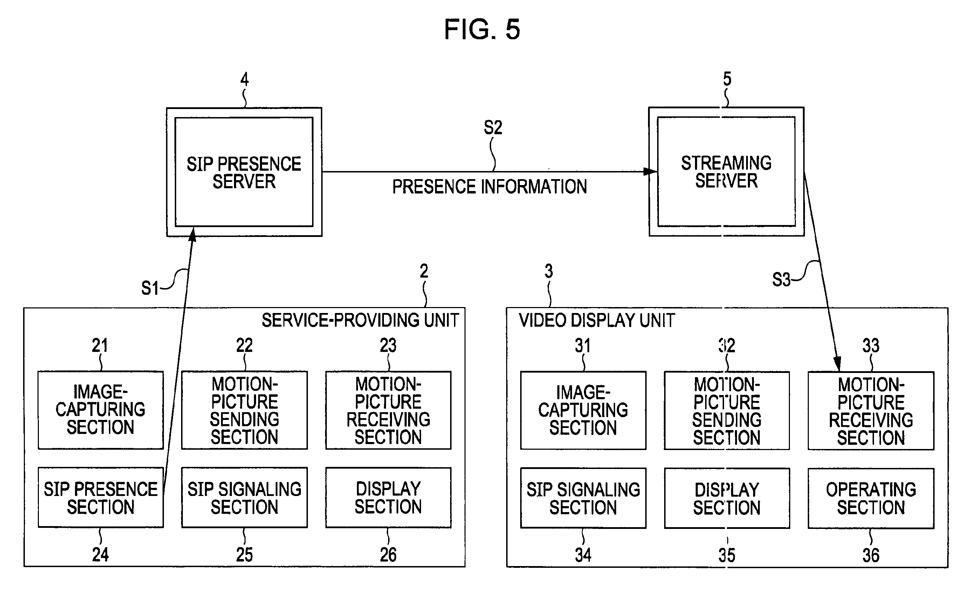

Fig. 5 is a simplified diagram showing an example of a process by which the service-providing unit 2 delivers the presence information to the video display unit 3. In this example, the video display unit 3 receives an MPEG stream (content) from the streaming server 5. The video display unit 3 receives IP broadcasts from the streaming server 5 and displays video on the display section 35.

First, if the service provider updates the presence information, the SIP presence section 24 of the service-providing unit 2 sends the updated presence information to the SIP presence server 4 (Step S1). The presence information update refers to information indicating that the status of the service provider has been changed, for example, from the "away" status, which means that the service provider is away from his or her seat, to the "online" status, which means that the service provider is seated.

Next, the SIP presence server 4 sends the presence information received from the service-providing unit 2 to the streaming server 5 (Step S2). The streaming server 5 then stores the presence information in MPEG packets and sends an MPEG steam to the video display unit 3 (Step S3).

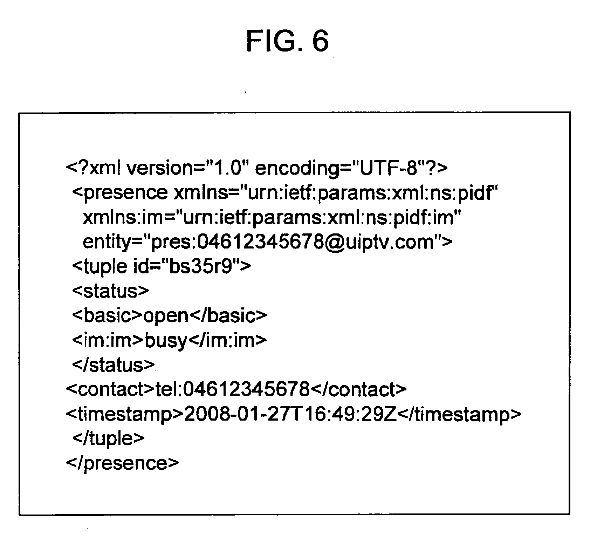

Fig. 6 shows an example of writing of the presence information received and sent by the individual units.

In this example, the message format used to describe the presence information is XML (Extensive Markup Language) in accordance with PIDF (Presence Information Data Format): RFC 3863.

The presence information sent from the service-providing unit 2 to the streaming server 5 via the SIP presence server 4 contains the telephone number of the service provider (in the example shown, "046-1234-5678") and information about the current status of the service provider. The writing shown implies that the service provider is in the "busy" status, which means that the service provider is serving another user.

The video display unit 3 reads the presence information from the MPEG stream received from the streaming server 5. To receive a service from the service provider, the user calls the telephone number assigned to the service-providing unit 2 belonging to the service provider. When the service-providing unit 2 accepts the call from the video display unit 3, an SIP session is established, so that the user can talk via NGN. In this state, the user is receiving the service from the service provider.

Next, as an example of a stream format for storing the presence information, an MPEG-2 transport stream (MPEG-2 TS) will be described.

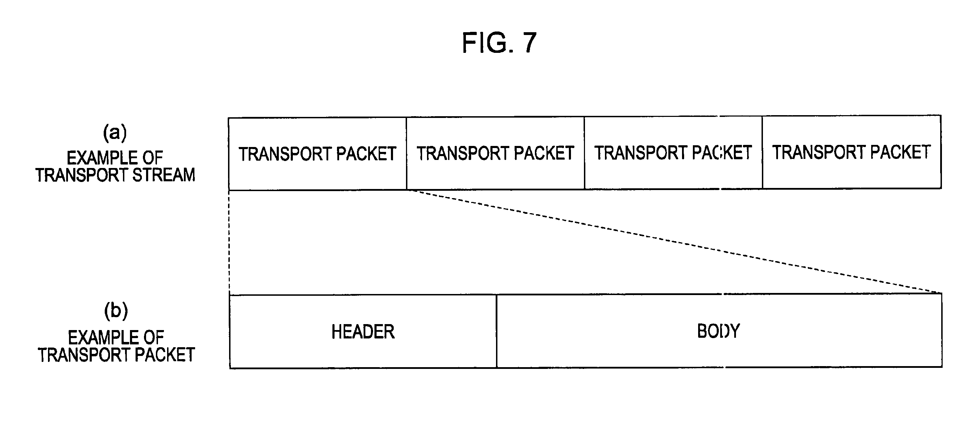

Fig. 7 shows an example of the structure of a transport stream and a transport packet based on the MPEG-2 TS format. The terms "transport stream" and "transport packet" are broader than the terms "MPEG stream" and "MPEG packet"; thus, the stream format used is not limited to MPEG-2 but may be any video transmission format that applies to the transport stream and the transport packet described herein.

Part (a) of Fig. 7 shows an example of the structure of a transport stream.

MPEG-2 TS includes successive transport packets of predetermined length. As shown in Part (a) of Fig. 7, the successive transport packets constitute the transport stream. The transport packets, which are predetermined units into which the content is divided, basically contain information about motion pictures or still pictures and can also contain information about audio and programs.

Part (b) of Fig. 7 shows an example of the structure of a transport packet.

A transport packet includes a header and a body. The header typically contains information about, for example, the type, sequence number, time stamp, source, and destination of the packet. The body, on the other hand, stores audio, a motion picture, and metadata such as an electronic program guide (EPG). Metadata is data contained in an MPEG stream to specify the structure of the MPEG data. In this example, the body stores presence information as metadata.

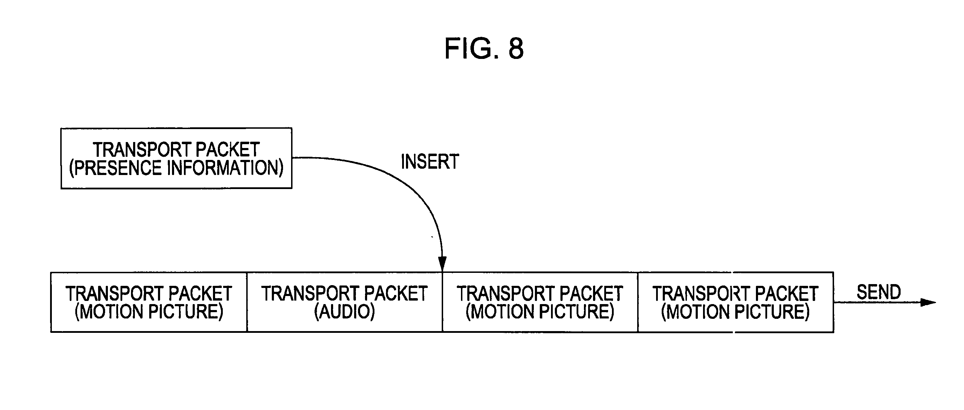

Fig. 8 shows an example of how to insert a transport packet containing presence information.

In the example shown, the presence information is inserted into an MPEG-2 stream used for IP broadcasting. Receiving updated presence information from the SIP presence server 4, the streaming server 5 sends a transport stream into which a transport packet storing the presence information has been inserted to the video display unit 3. The video display unit 3 can then extract the transport packet from the received transport stream to acquire the presence information updated by the service-providing unit 2.

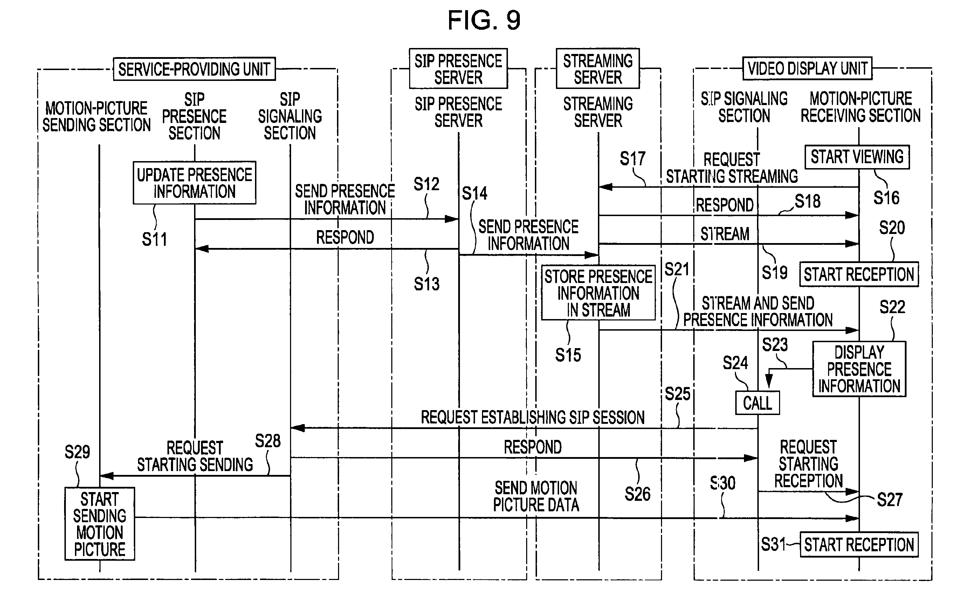

Next, an example of a process of sending a transport stream storing presence information will be described with reference to Fig. 9. The process will be illustrated in detail by focusing on requests for processing and responses in the individual blocks.

First, the SIP presence section 24 of the service-providing unit 2 updates presence information depending on the status of the service provider (Step S11) and sends the presence information to the SIP presence server 4 (Step S12). The SIP presence server 4 then responds by notifying the SIP presence section 24 that the SIP presence server 4 has successfully received the presence information (Step S 13).

Next, the SIP presence server 4 sends the updated presence information to the streaming server 5 (Step S14). The streaming server 5 then stores the received presence information in an MPEG stream (Step S15).

On the other hand, the motion-picture receiving section 33 of the video display unit 3 enters a viewing state in order to display content on the display section 35 (Step S16). The motion-picture receiving section 33 then requests the streaming server 5 to start to send an MPEG stream (Step S17).

The streaming server 5 responds by notifying the motion-picture receiving section 33 that the streaming server 5 has successfully received the request for starting to send an MPEG stream (Step S 18). The streaming server 5 then sends an MPEG stream to the motion-picture receiving section 33 (Step S19). The motion-picture receiving section 33 starts to receive the MPEG stream (Step S20).

Upon receiving the presence information from the SIP presence server 4, the streaming server 5 sends the MPEG stream to the motion-picture receiving section 33 to notify it of the presence information update (Step S21). The motion-picture receiving section 33 then displays the content and the presence information played back from the MPEG stream on the display section 35 (Step S22).

To request a service from the service provider, the user inputs the telephone number of the service provider using the operating section 36 with reference to the presence information displayed on the display section 35 (Step S23). The SIP signaling section 34 then calls the input telephone number for the service-providing unit 2 (Step S24).

Upon calling the telephone number, the SIP signaling section 34 of the video display unit 3 requests the SIP signaling section 25 of the service-providing unit 2 to establish an SIP session (Step S25).

The SIP signaling section 25 responds by notifying the SIP signaling section 34 that an SIP session has been established (Step S26). Upon receiving this response, the SIP signaling section 34 requests the motion-picture receiving section 33 to start to receive motion picture data sent from the service-providing unit 2 (Step S27).

On the other hand, the SIP signaling section 25 of the service-providing unit 2 requests the motion-picture sending section 22 to start to send motion picture data (Step S28). Upon receiving the request for starting to send the motion picture data, the motion-picture sending section 22 starts to send the motion picture data to the video display unit 3 (Step S29). The motion picture data sent contains captured video and audio of the service provider.

With the SIP session established, the motion-picture sending section 22 sends the motion picture data to the motion-picture receiving section 33 of the video display unit 3 (Step S30). The motion-picture receiving section 33 then starts to receive the motion picture data (Step S31). The user continues the call while displaying a motion picture of the service provider from the received motion picture data on the display section 26.

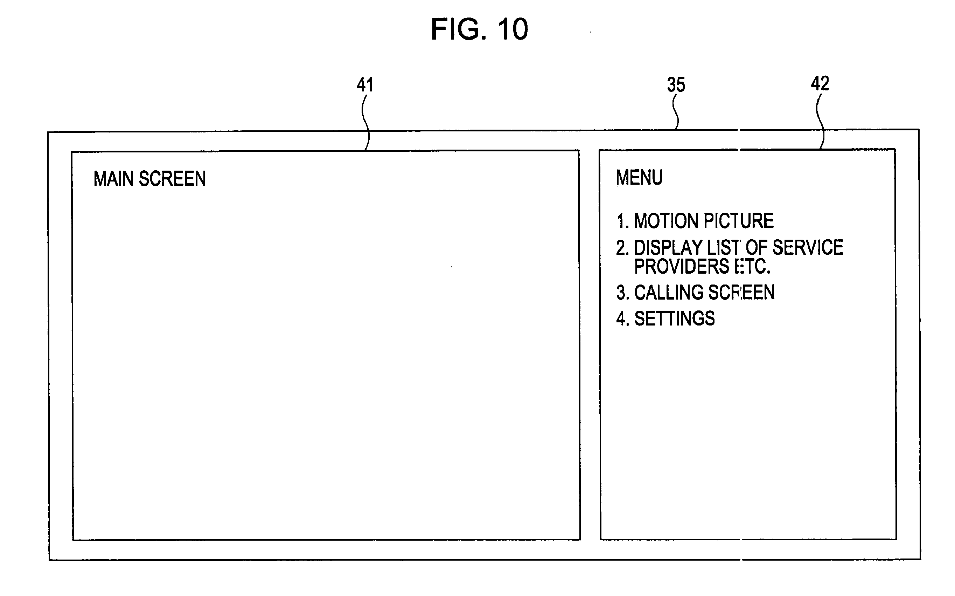

Next, an example of a menu displayed on the display section 35 of the video display unit 3 will be described with reference to Figs. 10 to 13.

Fig. 10 shows an example of an initial screen of the menu.

The screen displayed on the display section 35 includes a main screen 41 displaying, for example, the service provider's face and a menu screen 42 from which various menu options can be selected. The video display unit 3 can receive content containing the main screen 41 and the menu screen 42 through access to a portal site managed by the streaming server 5 and display it on the display section 35.

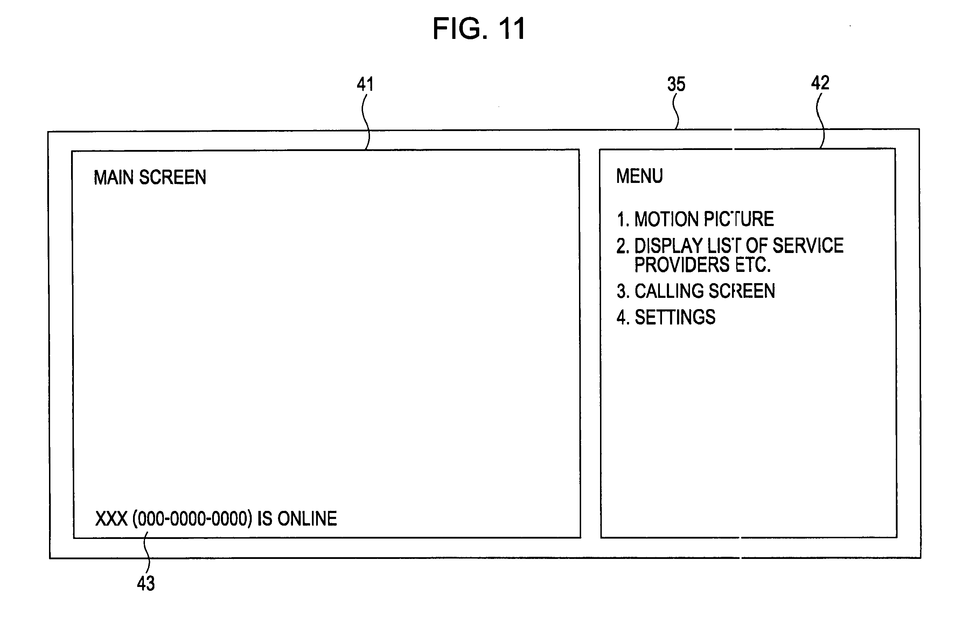

Fig. 11 shows an example of a display appearing after the presence information is updated.

The presence information updated by the service-providing unit 2 is sent to the video display unit 3 via the SIP presence server 4 and the streaming server 5. The video display unit 3 analyzes the received presence information and overlays a message 43 including the name and telephone number of the service provider in the bottom of the main screen 41.

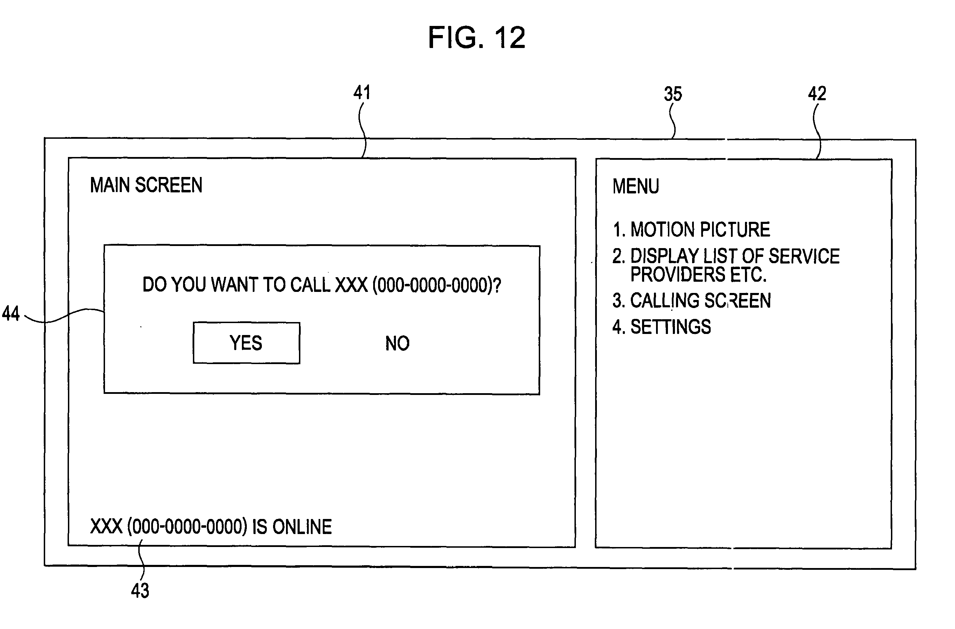

Fig. 12 shows an example of a display from which the user calls the service provider.

When a display indicating that the service provider is "online" appears on the main screen 41, a subscreen 44 appears on the main screen 41 to allow the user to select whether to call the service provider. The user selects to call the service-providing unit 2 managed by the service-providing company in the online status using the operating section 36. If the service-providing company directly provides a service for the video display unit 3, the following displays do not appear.

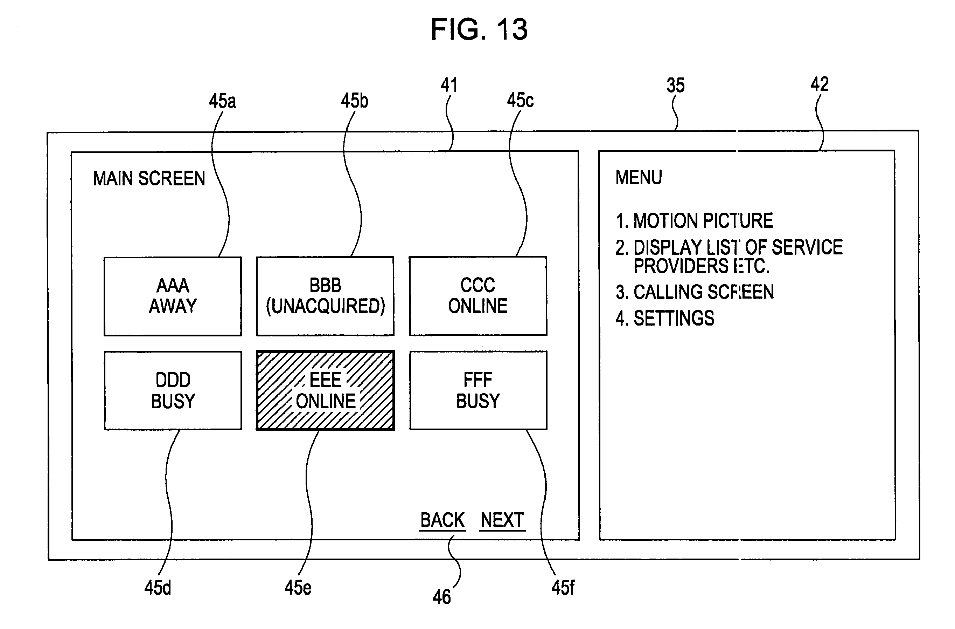

Fig. 13 shows an example of a display from which the user selects a service provider.

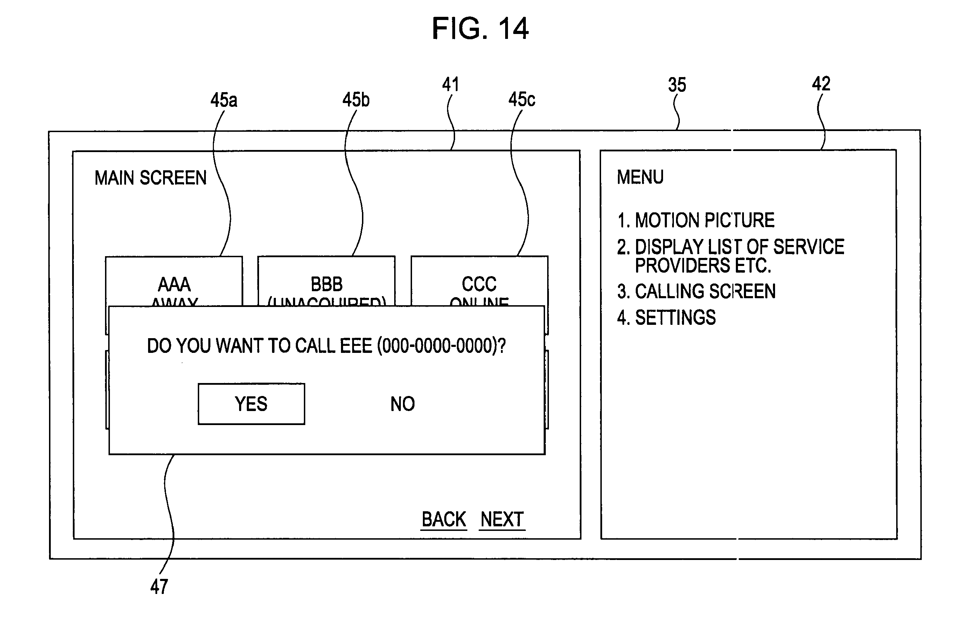

If a plurality of service providers are linked, a display for selecting the service-providing unit 2 used by a desired service provider appears on the display section 35 of the video display unit 3 (see Figs. 13 and 14). When the user selects to call the service provider from the subscreen 44 shown in Fig. 12, icons 45a to 45f display presence information for the individual service providers belonging to the service-providing company. Updates to the presence information are immediately reflected in the icons 45a to 45f. If the user wishes to display service providers other than those displayed on the main screen 41, the user selects a menu option 46 to change the display.

Fig. 14 shows an example of a display from which the user selects to call the service provider.

If the user selects the icon 45e on the main screen 41 shown in Fig. 13 using the operating section 36, a subscreen 47 appears, allowing the user to select whether to call the selected service provider. By selecting "Yes", the user calls the service provider displayed on the subscreen 47. The user can then receive a service from the desired service provider.

In the service-providing system 1 according to the embodiment described above, the presence information for the service provider linked to the service-providing unit 2 is registered in the SIP presence server 4 each time the presence information is updated. The SIP presence server 4 sends the updated presence information to the streaming server 5, which then adds the received presence information to the MPEG stream being sent to the video display unit 3. The video display unit 3 reads the presence information from the received MPEG stream and displays the updated presence information for the service provider on the display section 35. The user learns the presence information update for the service provider while receiving the content. This provides the benefit of easily learning the status of the desired service provider.

In addition, the streaming server 5 stores the received presence information in the presence-information storing section 55 and, when the presence information is updated by the service-providing unit 2, inserts the updated presence information into the content. Accordingly, the service-providing unit 2 sends only the updated presence information to the SIP presence server 4 and therefore does not overload the bandwidth of the line connecting together the service-providing unit 2, the SIP presence server 4, and the streaming server 5.

In addition, the streaming server 5 sends the content as a transport stream of successive transport packets containing motion picture or audio data. The streaming server 5 can send even a high volume of content to the video display unit 3 gradually by dividing the content into transport packets. The transport packets are also easy to resend even if they are lost while being sent. Furthermore, the streaming server 5 can send the transport stream to the video display unit 3 while maintaining the continuity of the transport packets by inserting a transport packet containing the presence information into the transport stream.

In addition, the transport stream is an MPEG stream, and the presence information is contained in the MPEG stream and is inserted into metadata specifying the structure of the MPEG data. Because the streaming server 5 sends the content in the form of a general-purpose MPEG stream, the MPEG stream received by the video display unit 3 can readily be analyzed to play back the content and extract the presence information.

Although the process of inserting the transport packet containing the presence information into part of the transport stream of successive transport packets has been described in the above embodiment, it is also possible to add updated presence information to the content itself and send it to the video display unit 3.

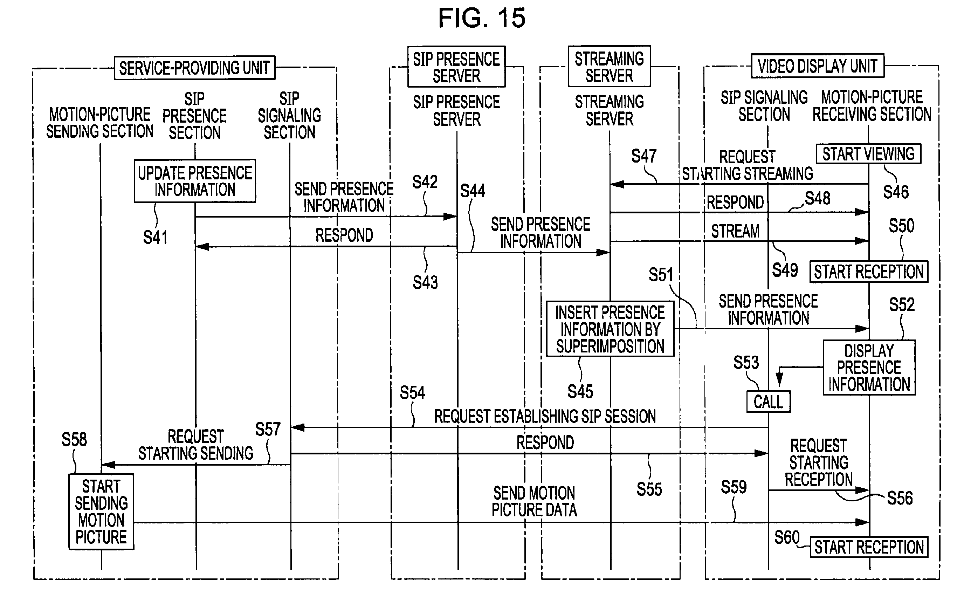

An example of a process of sending the content (motion picture) with the presence information inserted therein by superimposition will be described with reference to Fig. 15. The process will be illustrated in detail by focusing on requests for processing and responses in the individual blocks, where a detailed description of Steps S41 to S44, S46 to S50, and S51 to S60 will be omitted because they are similar to those in the above process of sending the transport stream storing the presence information (see Fig. 9).

In this example, the SIP presence server 4 sends updated presence information to the streaming server 5 (Step S44). The streaming server 5 then inserts the received presence information into the content by superimposition (Step S45). At this time, the presence-information inserting section 52 superimposes the received presence information on the image obtained by playing back the content. The presence-information inserting section 52 then generates the content from the synthesized image. The content-sending section 53 streams the resultant content to the video display unit 3 as an MPEG stream (Step S51).

Thus, the streaming server 5 superimposes the received presence information on the image obtained by playing back the content, generates the content from the synthesized image, and streams it to the video display unit 3. The user can therefore learn the presence of the service provider while viewing the content updated in real time. In addition, the video display unit 3 can display the presence information without a special function because the presence information is sent as a motion picture contained in part of the content. The superimposition of the presence information on the content may be executed in any of the streaming server 5, the service-providing unit 2, and the SIP presence server 4.

Although the individual units shown in, for example, Fig. 1 are assumed to be units dedicated for different processing in the embodiment described above, a general-purpose computer may be used instead of the units such as the streaming server. In this case, programs (software) that provide the processing functions described above when installed in the computer may be prepared. The programs may be distributed in the form of various storage media or may be arranged to be downloaded via a transmission media such as the Internet.

It should be understood by those skilled in the art that various modifications, combinations, sub-combinations and alterations may occur depending on design requirements and other factors insofar as they are within the scope of the appended claims.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A method for providing a service, comprising the steps of:
sending presence information indicating the availability of a service-providing unit from the service-providing unit to a streaming server by a first transmission method, the service-providing unit being configured to provide a service including providing a motion picture and audio for a video display unit requesting the service, the streaming server being configured to send content containing the contents of the service provided by the service-providing unit;
inserting the presence information received by the streaming server from the service-providing unit into the content and streaming the content to the video display unit;
extracting the presence information from the content received by the video display unit from the streaming server and requesting the service-providing unit to provide the service on the basis of the content of the presence information by a second transmission method; and
establishing a transmission route for providing the service between the service-providing unit and the video display unit requesting the service by the second transmission method and providing the service for the video display unit via the transmission route.

2. The method for providing a service according to Claim 1, wherein the streaming server stores the received presence information in a storage section and, when the presence information is updated by the service-providing unit, inserts the updated presence information into the content.

3. The method for providing a service according to Claim 2, wherein the streaming server superimposes the received presence information on an image obtained by playing back the content, generates the content from the synthesized image, and sends the content to the video display unit.

4. The method for providing a service according to Claim 1, wherein
the streaming server sends the content as a transport stream of successive transport packets containing motion picture or audio data; and
the streaming server inserts a transport packet containing the presence information into the transport stream.

5. The method for providing a service according to Claim 4, wherein
the transport stream is an MPEG stream; and
the presence information is contained in the MPEG stream and is inserted into metadata specifying the structure of the MPEG data.

6. A streaming server comprising:
a presence-receiving section configured to receive presence information indicating the availability of a service-providing unit from the service-providing unit by a first transmission method, the service-providing unit being configured to provide a service including providing a motion picture and audio for a video display unit requesting the service;
a presence-inserting section configured to insert the presence information received from the service-providing unit into content containing the contents of the service provided by the service-providing unit; and
a content-sending section configured to stream the content to the video display unit.

7. The streaming server according to Claim 6, further comprising a storage section configured to store the presence information and the content received by the presence-receiving section.

8. A program for executing a process comprising the steps of:
receiving presence information indicating the availability of a service-providing unit from the service-providing unit by a first transmission method, the service-providing unit being configured to provide a service including providing a motion picture and audio for a video display unit requesting the service;
inserting the presence information received from the service-providing unit into content containing the contents of the service provided by the service-providing unit; and
streaming the content to the video display unit.
